Europäisches Patentamt

European Patent Office

Office européen des brevets

(19)

(11) Publication number: **0 062 423**
**B1**

(12) **EUROPEAN PATENT SPECIFICATION**

(45) Date of publication of patent specification: **06.02.85**

(51) Int. Cl.⁴: **B 65 G 15/14**

(21) Application number: **82301359.4**

(22) Date of filing: **17.03.82**

(54) Belt conveyors.

(30) Priority: **08.04.81 GB 8110961**

(43) Date of publication of application:
**13.10.82 Bulletin 82/41**

(45) Publication of the grant of the patent:
**06.02.85 Bulletin 85/06**

(84) Designated Contracting States:
**AT BE CH DE FR IT LI LU NL SE**

(56) References cited:
**DE-B-1 184 698**
**GB-A- 964 334**
**GB-A-2 036 681**

(73) Proprietor: **GEC MECHANICAL HANDLING
LIMITED
Beanacre Road
Melksham Wiltshire SN12 8AX (GB)**

(72) Inventor: **Smallwood, John Michael Terence
21 Napier Road
Bath Avon, BA1 4LN (GB)**

(74) Representative: **Kirby, Harold Victor Albert
Central Patent Department Wembley Office The
General Electric Company, p.l.c. Hirst Research
Centre East Lane
Wembley Middlesex HA9 7PP (GB)**

## Description

This invention relates to belt conveyors for use in raising or lowering separate items, for example bags or sacks of cement or cereals, or alternatively loose particulate materials, of the kind comprising a pair of opposed endless belts disposed so as to provide a generally vertical conveying region, and means for driving the belts so that adjacent runs travel in the same direction such that items or material introduced between them at the commencement of the run are carried to the opposite end of the run.

One such conveyor is described in United Kingdom Patent Specification No. 964334, the conveyor incorporating a plurality of rollers spaced along the adjacent runs of the belts and carried by pivoted arms extending upwards from the pivots so as to press against one of the belts and urge it against the other.

A modified form of such a conveyor for use in loading items into, or unloading them from the holds of ships forms the subject of co-pending U.K. Patent Application No. 2,036,681.

According to the present invention in a conveyor of the kind referred to incorporating a plurality of rollers carried by pivoted arms, spaced along the adjacent runs of the belts and arranged to press against one of the belts, the pivoted arms have a rest position in which they extend from the pivots in a generally downward direction such that the action of gravity tends to urge the rollers towards the adjacent runs of the belts, with the arms inclined to said adjacent runs at an angle of not more than 20°, and preferably of the order of 10°.

The pivot axes preferably lie closely adjacent to the belts conveniently on the opposite side of the operative runs of belts to the rollers and, whilst the arms will be deflected from their rest position in use of the conveyor depending upon the size of items being carried, they are preferably of such a length that, in normal use, the inclination of the arms to the adjacent runs of the belts remains at less than 45°.

It has been found that such a conveyor operates with equal facility when raising or lowering separate items or loose particulate materials, and a conveyor in accordance with the present invention may therefore be used equally well both for loading cargoes into and unloading them from ships' holds.

The rollers are preferably arranged to urge the belts against suitably positioned reaction rollers.

The pivoted rollers may be biased against the adjacent belt simply by the force of gravity acting on the rollers and their supporting arms, although in some cases one or more weights may be added or springs arranged to act on the arms, where an extra biasing force is required.

Moreover in some cases the force of gravity may be supplemented by pneumatic or hydraulic devices. These may be connected to a central pneumatic or hydraulic pressure controller, which may be adjusted to vary the force exerted by the rollers on the belts if necessary to enable the conveyor to handle different items or materials. The pressures exerted by the rollers could, in some cases be arranged to be different, at different positions along the conveyor, and at least some of the roller arms may be damped pneumatically or in any other manner, if desired.

The optimum spacing of the rollers will depend on the type of items or materials which the conveyor is designed to carry, but may readily be chosen to suit any particular application of the invention.

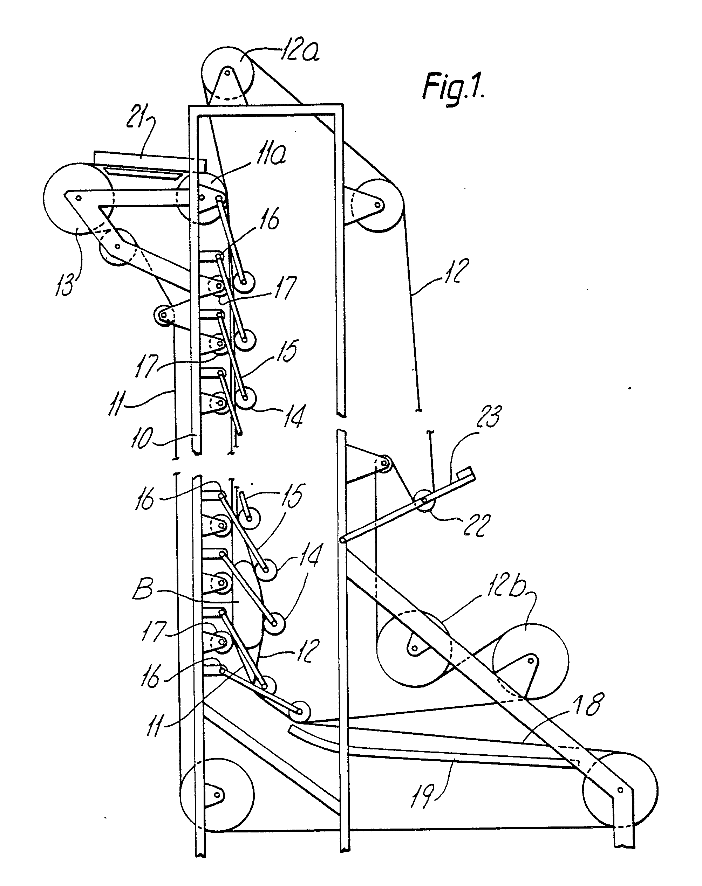

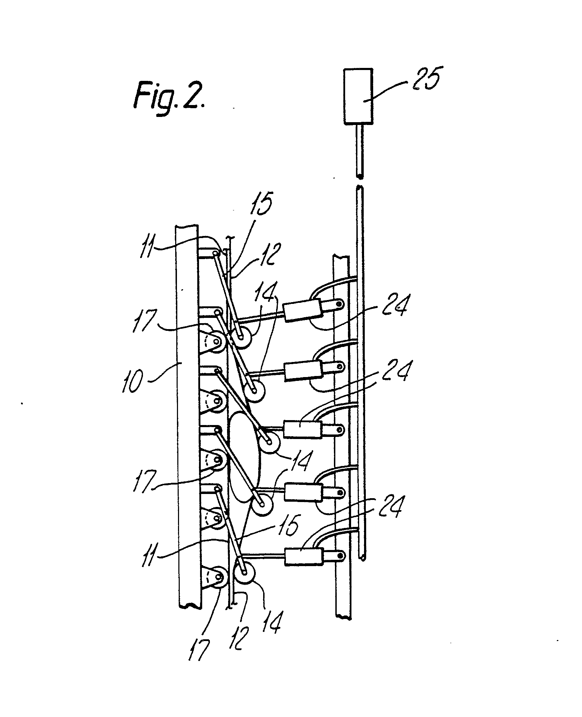

The invention has particular application to the loading and unloading of bagged cargo, which term is intended to include within its scope material in bags, sacks and other like containers, as well as other forms of cargo consisting of separate items such as boxed material, animal carcases and other individual or packaged articles, into and from the holds of ships, and one conveyor in accordance with the invention designed for such a purpose and a modification thereof will now be described with reference to Figures 1 and 2 of the accompanying schematic drawings, in which

Figure 1 illustrates a side view of the conveyor, and

Figure 2 illustrates part of the modified conveyor.

Referring first to Figure 1, the conveyor, which is shown diagrammatically and not to scale, comprises essentially an elongated rectangular-section framework 10 (shown only in part) arranged to be supported substantially vertically and carrying a pair of conveyor belts 11, 12 extending lengthwise along it, the belts passing around pulleys at the top and bottom of the framework.

An upper pulley 13 carrying the belt 11 is arranged to be driven by a reversible electric motor (not shown). The inner run of the belt 12 is urged towards the driven belt 11 by a series of spaced rollers 14 carried by pivoted arms 15. The axes 16 about which the arms 15 are arranged to pivot are disposed close to the adjacent runs of the belts 11, 12 on the opposite side of the runs to the rollers 14 as shown, the arms 15 extending in a downward direction and having a length such that they are inclined at only a small angle, for example about 10°, to the vertical in the rest position. Each of the rollers 14 is biased towards the adjacent belt 12 under its own weight, so that the belt 11 is urged against a co-operating reaction roller 17.

The inner run of the belt 12 is thus also caused to travel upwards or downwards as the case may be by frictional engagement with the belt 11.

A dancer roll 22 supported by pivoted arms 23 carried by the framework 10 bears against the downward run of the belt 12, thus maintaining the part of the belt between its upper pulley 12a and lower pulleys 12b under tension.

At the lower end, the belt 11 terminates in a short horizontally extending region 18 projecting beyond the belt 12 as shown, with its upper run in this position supported by a slider bed 19.

When the belts are driven in the appropriate direction articles such as bags or sacks placed on the horizontal extension 18 of the belt 11 are carried between the belts as at B, and the rollers 14 acting against the belt 12 cause the articles to be held frictionally in contact with the belt 11 which causes them to be carried upwards.

The belt 11 similarly extends for a short distance approximately horizontally at the top of the conveyor as at 21 where the articles may be fed to another conveyor for further transportation.

The conveyor in accordance with the invention is conveniently mounted on a boom to permit it to be introduced into the hold of a ship in the manner of the equipment described and illustrated in co-pending Patent Application No. 2,036,681 and can thus be used for unloading cargo from the hold.

The conveyor is, however, also arranged to be operated in the reverse direction, for example for loading purposes and in such a case articles deposited on the upper horizontally extending part 21 of the belt 11 for example from another conveyor, are carried between the downwardly moving runs of the belts 11, 12 and thus delivered to the lower horizontally-extending part 18 of the belt 11 for loading into the hold, either manually directly from the conveyor or after delivery on to a further conveyor for transfer to another part of the hold.

The length of the roller arms 15 are such that even when the rollers 14 are deflected from their normal rest position by a bag, sack or other article of the dimensions with which the conveyor is designed to handle, the maximum angle at which the arms are inclined to the adjacent runs of the conveyor belts is normally of the order of 20° to 30°, and it has been found that by utilising rollers 14 pivoted in such a manner, the conveyor operates equally well both for loading and unloading.

The frame of the conveyor is conveniently mounted on a wheeled structure (not shown) as in the case of the cargo handling equipment described in Patent Application No. 2,036,681.

In the modification illustrated in Figure 2 the belts 11, 12 are supported in a similar manner to those of Figure 1, and adjacent runs of the belts are similarly urged towards each other and against a series of reaction rollers 17 by rollers 14 carried by pivoted arms 15. In this embodiment, however, the biasing of the rollers 14 against the belt 12 is assisted by respective pneumatic or hydraulic piston and cylinder units, as at 24. These are conveniently connected to a common pneumatic or hydraulic pressure regulator, shown schematically at 25 which may be adjusted to enable the force exerted by the rollers 14 on the belt 12 to be quickly and easily changed for the handling of different cargoes.

**Claims**

1. A belt conveyor of the kind comprising a pair of opposed endless belts (11, 12) disposed so as to provide a generally vertical conveying region, means for driving the belts (11, 12) so that adjacent runs travel in the same direction such that items (B), or material introduced between them at the commencement of the run are carried to the opposite end of the run, and a plurality of rollers (14), carried by pivoted arms (15), spaced along the adjacent runs of the belts, characterised in that the pivoted arms (15) have a rest position in which they extend from the pivots (16) in a generally downward direction such that the action of gravity tends to urge the rollers (14) towards the adjacent runs of the belts (11, 12) with the arms (15) inclined to said adjacent runs at an angle of not more than 20°.

2. A belt conveyor according to Claim 1 wherein the pivoted arms (15) have a rest position in which they extend generally downwards at an angle of about 10° to the adjacent runs of the belts (11, 12).

3. A belt conveyor according to Claim 1 or 2 wherein the arms (15) are pivoted about axes (16) which lie on the opposite side of the operative runs of the belts (11, 12) to the rollers (14).

4. A belt conveyor according to Claim 1, 2 or 3 wherein the length of the arms (15) is such that under deflection in normal use of the conveyor the inclination of the arms (15) to the adjacent runs of the belts (11, 12) is less than 45°.

5. A belt conveyor according to Claim 4 wherein the length of the arms (15) is such that under deflection in normal use of the conveyor the inclination of the arms to the adjacent runs of the belts (11, 12) is not more than 30°.

6. A belt conveyor according to any preceding Claim incorporating a plurality of reaction rollers (17) against which the other of the two adjacent runs of the belts (11, 12) is urged by the action of the pivotally carried rollers (14).

7. A belt conveyor according to any preceding Claim wherein the pivotally carried rollers (14) are biased against the adjacent belt (12) simply by the force of gravity.

8. A belt conveyor according to any one of Claims 1 to 6 including pneumatic or hydraulic devices (24, 25) which act on the pivoted arms (15) and bias the rollers (14) carried thereby against the adjacent belt under a controlled and adjustable pressure.

9. A cargo handler for loading cargo into or unloading it from the holds of ships incorporating a belt conveyor according to any preceding Claim.

**Revendications**

1. Transporteur à bandes du type qui comprend deux bandes sans fin (11, 12) placées en face l'une de l'autre et disposées de manière qu'elles délimitent une région de transport en direction générale verticale, un dispositif d'entraînement des courroies (11, 12) afin que les brins adjacents se déplacent dans le même sens, de manière que les articles (B) ou la matière introduits entre eux au début du brin soient transportés vers l'extrémité opposée du brin, et plusieurs rouleaux (14) portés par des bras articulés (15) espacés le long des brins adjacents des bandes, caractérisé en ce que les bras articulés (15) ont une position de repos dans laquelle ils dépassent des pivots (16) en direction générale descendante si bien que l'action de la pesanter a tendance à rappeler les rouleaux (14) vers les brins adjacents des bandes (11, 12), les bras (15) étant inclinés vers les brins adjacents avec une inclinaison qui ne dépasse pas 20°.

2. Transporteur à bandes selon la revendication 1, dans lequel les bras articulés (15) ont une position de repos dans laquelle ils sont en direction générale descendante avec une inclinaison d'environ 10° par rapport aux brins adjacents des bandes (11, 12).

3. Transporteur à bandes selon l'une des revendications 1 et 2, dans lequel les bras (15) sont articulés autour d'axes (16) qui sont placés du côté des brins de travail des bandes (11, 12) opposé à celui des rouleaux (14).

4. Transporteur à bandes selon l'une quelconque des revendications 1 à 3, dans lequel la longueur des bras (15) est telle que, lors d'un fléchissement au cours de l'utilisation normale du transporteur, l'inclinaison des bras (15) par rapport aux brins adjacents des bandes (11, 12) est inférieure à 45°.

5. Transporteur à bandes selon la revendication 4, dans lequel la longueur des bras (15) est telle que, après fléchissement lors du fonctionnement normal du transporteur, l'inclinaison des bras par rapport aux brins adjacents des bandes (11, 12) ne dépasse pas 30°.

6. Transporteur à bandes selon l'une quelconque des revendications précédentes, comprenant plusieurs rouleaux de réaction (17) contre lesquels l'autre des deux brins adjacents des bandes (11, 12) est repoussé sous l'action des rouleaux (14) portés sous forme articulée.

7. Transporteur à bandes selon l'une quelconque des revendications précédentes, dans lequel les rouleaux (14) portés d'une manière articulée sont repoussés contre la bande adjacente (12) simplement par la force de pesanteur.

8. Transporteur à bandes selon l'une quelconque des revendications 1 à 6, comprenant des dispositifs pneumatiques ou hydrauliques (24, 25) qui agissant sur les bras articulés (15) et repoussent les rouleaux (14) qu'ils portent contre la bande adjacente, avec une pression réglée et réglable.

9. Appareil de manutention de cargaisons destiné au chargement d'une cargaison dans les cales d'un navire ou à son déchargement, comprenant un transporteur à bandes selon l'une quelconque des revendications précédentes.

**Patentansprüche**

1. Bandförderer mit zwei gegenüberliegenden endlosen Bändern (11, 12), die so angeordnet sind, daß ein allgemein vertikaler Förderbereich gebildet ist, einer Einrichtung zum Antrieb der Bänder (11, 12), so daß benachbarte Bahnen in derselben Richtung laufen und Gegenstände (B) oder ein Material, das zwischen ihnen zu Beginn der Bahn eingeführt wird, zu dem entgegengesetzten Ende der Bahn geführt wird, und mit mehreren Rollen (14), die von drehbar angelenkten Armen (15) gehalten und entlang der benachbarten Bahnen der Bänder beabstandet sind, dadurch gekennzeichnet, daß die drehbar angelenkten Arme (15) eine Auflageposition haben, in der sie sich von den Drehpunkten (16) allgemein in Abwärtsrichtung erstrecken, so daß die Wirkung der Schwerkraft der Rollen (14) gegen die benachbarten Bahnen der Bänder (11, 12) drückt, wobei die Arme (15) zu den benachbarten Bahnen in einem Winkel von nicht mehr als 20° geneigt sind.

2. Bandförderer nach Anspruch 1, dadurch gekennzeichnet, daß die drehbar angelenkten Arme (15) eine Auflageposition haben, in der sie sich in einem Winkel von etwa 10° zu den benachbarten Bahnen der Bände (11, 12) allgemein abwärts erstrecken.

3. Bandförderer nach Anspruch 1 oder 2, dadurch gekennzeichnet, daß die Arme (15) um Achsen (16) drehbar sind, die an der entgegengesetzten Seite der wirksamen Bahnen der Bänder (11, 12) zu den Rollen (14) liegen.

4. Bandförderer nach einem der Ansprüche 1 bis 3, dadurch gekennzeichnet, daß die Länge der Arme (15) derart ist, daß unter Auslenkung bei normalem Gebrauch des Förderers die Neigung der Arme (15) zu den benachbarten Bahnen der Bänder (11, 12) geringer als 45° ist.

5. Bandförderer nach Anspruch 4, dadurch gekennzeichnet, daß die Länge der Arme (15) derart ist, daß unter Auslenkung bei normalem Gebrauch des Förderers die Neigung der Arme zu den benachbarten Bahnen der Bänder (11, 12) nicht mehr als 30° beträgt.

6. Bandförderer nach einem der vorhergehenden Ansprüche, gekennzeichnet durch mehrere Rückdruckrollen (17), gegen die die andere der zwei benachbarten Bahnen der Bänder (11, 12) durch die Wirkung der drehbar gehaltenen Rollen (14) angedrückt wird.

7. Bandförderer nach einem der vorhergehenden Ansprüche, dadurch gekennzeichnet, daß die drehbar gelagerten Rollen (14) nur durch die Schwerkraft gegen den benachbarten Gurt (12) gedrückt werden.

8. Bandförderer nach einem der Ansprüche 1 bis 6, gekennzeichnet durch eine pneumatische oder hydraulische Einrichtung (24, 25), die auf die drehbar gelagerten Arme (15) wirkt und die von diesen gehaltenen Rollen (14) gegen den benachbarten Gurt unter einem gesteuerten und einstellbaren Druck andrückt.

9. Frachtverladevorrichtung zum Laden von Fracht in oder zum Entladen von Fracht aus Laderäumen von Schiffen, gekennzeichnet durch einen Bandförderer nach einem der vorhergehenden Ansprüche.

0 062 423

Fig.1.

Fig. 2.